Europäisches Patentamt

European Patent Office

Office européen des brevets

(19)

(11) Numéro de publication: **0 096 851**
**B1**

(12) **FASCICULE DE BREVET EUROPEEN**

(45) Date de publication du fascicule du brevet: **29.08.90**

(51) Int. Cl.⁵: **H 01 M 4/76**

(21) Numéro de dépôt: **83105661.9**

(22) Date de dépôt: **09.06.83**

(54) **Pochette individuelle pour électrode d'accumulateur électrique.**

(30) Priorité: **14.06.82 FR 8210313**

(43) Date de publication de la demande:
**28.12.83 Bulletin 83/52**

(45) Mention de la délivrance du brevet:
**29.08.90 Bulletin 90/35**

(84) Etats contractants désignés:
**AT BE CH DE FR GB IT LI LU NL SE**

(56) Documents cités:
**DE-C- 513 806**
**FR-A- 525 198**
**FR-A- 803 749**
**FR-A-1 541 792**
**US-A-1 802 435**

(73) Titulaire: **Société Anonyme dite SAFT**
**156, avenue de Metz**
**F-93230 Romainville (FR)**

(72) Inventeur: **Unceta, Ricardo**
**c/o SAFT 111, boulevard Alfred Daney**
**F-33300 Bordeaux (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention concerne une pochette pour accumulateur électrique de type nickel-fer ou nickel-cadmium.

On sait que la matière active pulvérulente d'une telle électrode est mise en place à l'intérieur d'étuis plats, nommés "pochettes", à parois minces finement perforées en acier nickelé. Une pochette est constituée à partir de deux bandes de feuillard; l'une des bandes est emboutie de manière à former un récipient et, après introduction de la matière active, les bords de ce récipient sont solidarisés aux bords de l'autre feuillard formant couvercle. On obtient donc une pochette fermée rigide.

Afin d'améliorer les performances électriques des accumulateurs concernés, il s'est avéré nécessaire d'accroître la rigidité mécanique et la conductivité électrique des électrodes; pour cela on a réalisé des pochettes étroites de largeur inférieure à 10 mm. Une telle fabrication est délicate et exige un outillage onéreux.

La présente invention a pour but de réaliser de façon plus simple et plus économique des pochettes pour électrode d'accumulateur présentant une rigidité mécanique et une conductivité électrique adéquates.

La présente invention a pour objet une pochette pour accumulateur électrique de type nickel-fer ou nickel-cadmium contenant de la matière active et étant constituée à partir de deux bandes de feuillard métallique finement perforé et dont les bords longitudinaux sont solidarisés, caractérisée par le fait qu'au moins un des deux feuillards qui la constituent présente une seule rainure longitudinale dont le fond vient au simple contact de l'autre feuillard de manière à former une pochette individuelle de largeur comprise entre 10 et 40 mm formant deux étuis parallèles entre eux.

Selon un mode de réalisation préférentiel, chacun des deux feuillards présente une rainure, et les fonds de ces rainures viennent au contact l'un de l'autre pour former deux étuis parallèles entre eux.

A titre d'exemple, la largeur de chaque rainure est de l'ordre de 2 millimetres, et sa profondeur au moins égale à 1 millimètre.

La hauteur de chaque pochette est de préférence comprise entre 2 mm et 10 mm.

D'autres caractéristiques et avantages de l'invention apparaîtront au cours de la description qui va suivre et qui sera faite à l'aide du dessin annexé, donné à titre illustratif mais nullement limitatif, et dans lequel:

la figure 1 montre en coupe transversale deux feuillards destinés à former une pochette selon l'invention,

la figure 2 montre en coupe transversale une pochette selon l'invention remplie de matière active.

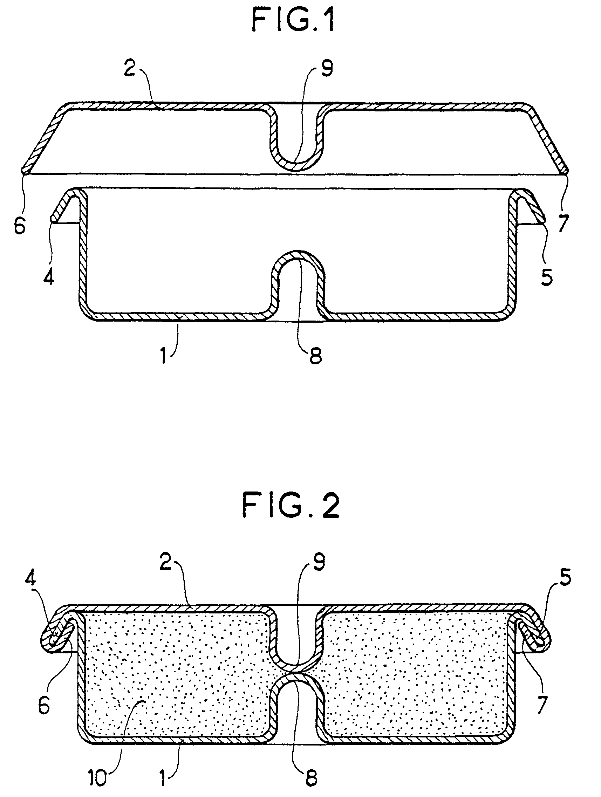

On voit en coupe sur la figure 1, deux bandes de feuillards 1 et 2, en acier finement perforé de largeur 14 millimètres et d'épaisseur de l'ordre du dizième de millimètre.

Ces deux feuillards ont initialement une longeur de plusieurs mètres et seront ultérieurement découpés à la dimension voulue.

Le feuillard inférieur 1 a été embouti de manière à former un récipient pour de la matière active; les bords 4, 5, 6, 7 des deux feuillards ont été déformés en vue d'une opération de solidarisation par sertissage.

Selon l'invention, on a réalisé par emboutissage une rainure 8 longitudinale, au milieu du feuillard 1 et une rainure 9 dans le feuillard 2 destinée à venir au droit de la rainure 8.

La largeur de chaque rainure est de l'ordre de 2 millimètres environ et sa profondeur de l'ordre de 1 millimètre.

Après remplissage du feuillard 1 par de la matière active 10 (voir figure 2), on sertit deux à deux les bords 4 à 7, et les fonds des rainures 8 et 9 viennent au contact l'un de l'autre de manière à réaliser deux étuis de matière active de largeur inférieure à 7 mm.

On peut aboutir ainsi, par des moyens mécaniques traditionnels, à des étuis très étroits ayant des performances mécaniques et électriques tout à fait analogues aux pochettes étroites réalisées antérieurement avec beaucoup de difficultés.

Bien entendu, l'invention n'est pas limitée au mode de réalisation qui vient d'être décrit.

Les feuillards mis en oeuvre peuvent présenter des largeurs beaucoup plus importantes, par exemple de l'ordre de 40 millimètres.

La hauteur minimale d'une pochette est de l'ordre de 2 mm, et sa hauteur maximale est de l'ordre de 10 mm.

On a montré des feuillards solidarises par sertissage, mais tout autre mode de fixation peut être envisagé, par exemple la soudure.

Si cela s'avère plus simple, et pour les pochettes de hauteur faible, inférieure à 2 millimètres par exemple, on peut envisager de ne réaliser des nervures que sur un seul des feuillards.

## Revendications

1. Pochette pour accumulateur électrique de type nickel-fer ou nickel-cadmium contenant de la matière active (10) et étant constituée à partir de deux bandes (1, 2) de feuillard métallique finement perforé et dont les bords longitudinaux (4 à 7) sont solidarisés, caractérisée par le fait qu'au moins un des deux feuillards (1, 2) qui la constituent présente une seule rainure longitudinale (8, 9) dont le fond vient au simple contact de l'autre feuillard de manière à former une pochette individuelle de largeur comprise entre 10 et 40 mm formant deux étuis parallèles entre eux.

2. Pochette selon la revendication 1, caractérisée par le fait que chacun des deux feuillards (1, 2) présente une rainure (8, 9) et que le fonds de ces rainures viennent au contact l'un de l'autre pour former deux étuis parallèles entre eux.

3. Pochette selon l'une des revendications 1 et 2, caractérisée par le fait que la hauteur de chaque pochette est comprise entre 2 mm et 10 mm.

4. Pochette selon la revendication 3, caractérisée par le fait que la largeur de chaque rainure est de l'ordre de deux millimètres.

5. Pochette selon la revendication 3, caractérisée par le fait que la profondeur de chaque rainure est au moins égale à 1 mm.

6. Pochette selon l'une des revendications 1 à 5, caractérisée en ce que la largeur de la pochette individuelle est de 14 mm.

**Patentansprüche**

1. Tasche für einen elektrischen Akkumulator vom Nickel-Eisen- oder Nickel-Kadium-Typ, wobei die Tasche aktives Material (10) enthält und ausgehend von zwei fein gelochten Metallfolienbändern (1, 2) hergestellt wird, die entlang ihrer Längsränder (4 bis 7) miteinander verbunden sind, dadurch gekennzeichnet, daß mindestens eines der beiden Folienbänder (1, 2), die die Tasche bilden, eine einzige Längsrille (8, 9) aufweist, deren Grund auf dem anderen Folienband lose aufliegt, so daß sich eine Einzeltasche mit einer Breite zwischen 10 und 40 mm bildet, die aus zwei zueinander parallelen Etuis gebildet wird.

2. Tasche nach Anspruch 1, dadurch gekennzeichnet, daß jedes der beiden Folienbänder (1, 2) eine Rille (8, 9) aufweist und daß die beiden Rillen mit ihren Grund aneinander liegen, um so zwei zueinander parallele Etuis zu bilden.

3. Tasche nach einem der Ansprüche 1 und 2, dadurch gekennzeichnet, daß die Höhe jeder Tasche zwischen 2 und 10 mm beträgt.

4. Tasche nach Anspruch 3, dadurch gekennzeichnet, daß die Breite jeder Rille etwa 2 mm beträgt.

5. Tasche nach Anspruch 3, dadurch gekennzeichnet, daß die Tiefe jeder Rille mindestens 1 mm beträgt.

6. Tasche nach einem der Ansprüche 1 bis 5, dadurch gekennzeichnet, daß die Breite der Einzeltasche 14 mm beträgt.

**Claims**

1. A pocket for an electrical storage cell of the nickel-iron or nickel-cadmium type, the pocket containing active material (10) and being made up from two lengths (1, 2) of finely perforated metal strip whose longitudinal edges (4 to 7) are fixed together, the pocket being characterized by the fact that at least one of the two strips (1, 2) constituting it has a single longitudinal groove (8, 9) whose bottom merely comes into contact with the other strip so as to form an individual pocket of between 10 mm and 40 mm wide constituting two parallel cases.

2. A pocket according to claim 1, characterized by the fact that each of the two strips (1, 2) has a groove (8, 9) and the bottoms of these grooves come into contact with each other in order to form two parallel cases.

3. A pocket according to claim 1 or 2, characterized by the fact that each pocket is between 2 mm and 10 mm high.

4. A pocket according to claim 3, characterized by the fact that each groove is about 2 mm wide.

5. A pocket according to claim 3, characterized by the fact that each groove is not less than 1 mm deep.

6. A pocket according to any one of claims 1 to 5, characterized in that the individual pocket is 14 mm wide.

# FIG.1

2   9
6   4   1   8   5
7

# FIG.2

4   2   9   5
6   10   1   8   7